# EUROPEAN PATENT APPLICATION

(11) **EP 3 587 065 A1**
(43) Date of publication of application: **01.01.2020**
(21) Application number: 18181043.3
(22) Date of filing: 30.06.2018
(51) Int. Cl.: B29C 45/14, B32B 15/08, B29K 705/00

(54) **POLYKETONE MATERIALS FOR NANO-MOLDING TECHNOLOGY**

(71) Applicant: SABIC Global Technologies B.V., 4612 PX Bergen op Zoom (NL)
(72) Inventor: HUI, Peng, Shanghai 201206 (CN); WEI, Shan, Shanghai, Shanghai 200063 (CN); PARK, Hyemin, Gyeonggi-do 13109 (KR); JANG, Kihyuk, 435-730 Gyeonggi-do (KR)
(74) Representative: Elzaburu S.L.P.

(57) **Abstract**

Disclosed herein are plastic-metal hybrid materials that are formed by injection molding a plastic composition comprising a polyketone onto a surface of a metal part, the surface having nanometer-sized pores, micron-sized pores, or both, the pores having been formed by chemical etching or by electrical oxidation and surface coating. Also provided are methods for forming the plastic-metal hybrids, components for electronic devices comprising the hybrid materials, and electronic devices that include a component comprising a plastic-metal hybrid material as disclosed.

## Description

### TECHNICAL FIELD

The present disclosure pertains to plastic materials for use in bonding with metal compounds pursuant to nano-molding technology applications.

### BACKGROUND

Nano-molding technology (NMT) is an innovative technology wherein plastic resin is integrated with metal by injection molding the resin onto the metal part. This process allows for miniaturization and reduced product thickness relative to convention methods for integrating plastic and metal parts, and typically confers improved structural strength and permanent adhesion between plastic and metal. In some instances, a watertight seal is provided.

The overall process for producing metal-plastic hybrid materials is a complicated and multi-step process. A key aspect is plastic performance during each stage. For example, the characteristics of the plastic are important not only during the injection molding process by which the hybrid is created, but also in subsequent steps in which the hybrid is treated in order to produce the necessary performance characteristics. Following the nano-injection molding process, the hybrid material is typically subjected to both numerical cutting and anodizing. A numerical cutting step is required to provide detailed structure of the hybrid part, and because the process generates heat and vibrational energy, the molded metal and plastic hybrid should have sufficient bonding strength and mechanical properties to withstand these external energies. An anodizing step is typically for activating the surface of the metal component in order to produce a color on the metal, and during this process the hybrid material is exposed to strong acid and base reagents. It is therefore necessary for the hybrid material (i.e., both the metal and plastic) to possess a high degree of chemical resistance in order to tolerate the anodizing process.

A basic and key property of the hybrid material is the bonding strength between the metal and plastic components. The dominant NMT materials currently in use are polyphenylene sulfide (PPS), polybutylene terephthalate (PBT) alone or blended with polyethyene terephthalate (PET), polyamide (PA), high-temperature PA (polyphthalamide - PPA), and polyetheretherketone (PEEK). All of these produce good bonding strength with metal (such as with aluminum or stainless steel). However, there are also limitations associated with each: PBT(/PET) is discolored during the anodizing process due to its weak acid resistance; nylon-based materials like PA and PPA possess poor resistance to the acid reagent of the anodizing process; and, the high cost of PEEK material renders its use mostly impractical.

Thus, although various resin materials are commercially available for NMT applications, there remains a need for improvement in the rapidly progressing field. High bonding strength, relatively low material cost, good processability in order to permit NMT molding, and good mechanical properties (such as impact strength) are desired.

### SUMMARY

Provided herein are plastic-metal hybrid materials that are formed by injection molding a plastic composition comprising a polyketone onto a surface of a metal part, the surface having nanometer-sized pores, micron-sized pores, or both, the pores having been formed by chemical etching or by electrical oxidation and surface coating.

Also provided are electronic devices comprising a plastic-metal hybrid material according to the present disclosure.

Also disclosed are methods for forming a plastic-metal hybrid material comprising injection molding a plastic composition comprising a polyketone onto a surface of a metal part, the surface having nanometer-sized pores, micron-sized pores, or both, the pores having been formed by chemical etching or by electrical oxidation and surface coating.

Also provided are electronic devices comprising a plastic-metal hybrid material that is formed according to the present methods.

### BRIEF DESCRIPTION OF THE DRAWINGS

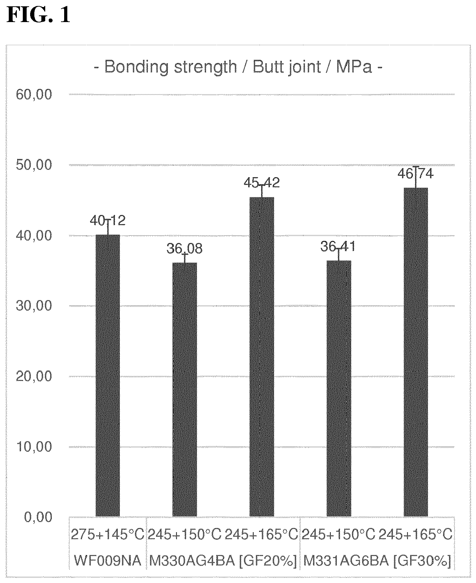

FIG. 1 depicts the results of an assessment of bonding strength respectively conferred by conventional and inventive materials.

### DETAILED DESCRIPTION OF ILLUSTRATIVE EMBODIMENTS

It is to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims that follow, reference will be made to a number of terms which shall be defined herein.

As used in the specification and the appended claims, the singular forms "a," "an" and "the" include plural equivalents unless the context clearly dictates otherwise. Thus, for example, reference to "a polycarbonate polymer" includes mixtures of two or more polycarbonate polymers.

As used herein, the term "combination" is inclusive of blends, mixtures, alloys, reaction products, and the like.

As used herein, the terms "about" and "at or about" mean that the amount or value in question can be the value designated some other value approximately or about the same. It is generally understood, as used herein, that it is preferably the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

All ranges disclosed herein are inclusive of the endpoints and are independently combinable. The endpoints of the ranges and any values disclosed herein are not limited to the precise range or value; they are sufficiently imprecise to include values approximating these ranges and/or values. Ranges articulated within this disclosure, e.g. numerics/values, shall include disclosure for possession purposes and claim purposes of the individual points within the range, sub-ranges, and combinations thereof. As an example, for the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

As used herein, the terms "optional" or "optionally" mean that the subsequently described event, condition, component, or circumstance may or may not occur, and that the description includes instances where said event or circumstance occurs and instances where it does not.

Disclosed are the components to be used to prepare the compositions of the disclosure as well as the compositions themselves, methods for preparing such compositions, and items made from the compositions. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight, of a particular element or component in a composition or article, denote the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "wt. %," and "wt. %" of a component, which can be used interchangeably, unless specifically stated to the contrary, are based on the total weight of the formulation or composition in which the component is included. For example if a particular element or component in a composition or article is said to have 8% by weight, it is understood that this percentage is relative to a total compositional percentage of 100% by weight.

The term "alkyl group" as used herein is a branched or unbranched saturated hydrocarbon group of 1 to 24 carbon atoms, such as methyl, ethyl, n propyl, isopropyl, n butyl, isobutyl, t butyl, pentyl, hexyl, heptyl, octyl, decyl, tetradecyl, hexadecyl, eicosyl, tetracosyl and the like. A "lower alkyl" group is an alkyl group containing from one to six carbon atoms.

A given alkyl group may include one or more substituents that replace hydrogen. Exemplary substituents include, for example, halo (*e.g.,* F, Cl, Br, I), alkyl, cycloalkyl, alkylcycloalkyl, cycloalkylalkyl, alkenyl, alkynyl, aralkyl, aryl, heteroaryl, heteroaralkyl, spiroalkyl, heterocycloalkyl, hydroxyl (-OH), nitro (-NO₂), cyano (-CN), amino (-NH₂), -N-substituted amino (-NHR"), -N,N-disubstituted amino (-N(R")R"), oxo (=O), carboxy (-COOH), -O-C(=O)R", -C(=O)R", -OR", -C(=O)OR", -(alkylene)-C(=O)-OR", -NHC(=O)R", aminocarbonyl (-C(=O)NH₂), -N-substituted aminocarbonyl (-C(=O)NHR"), -N,N-disubstituted aminocarbonyl (-C(=O)N(R")R"), thiol, thiolato (-SR"), sulfonic acid (-SO₃H), phosphonic acid (-PO₃H), -P(=O)(OR")OR", -S(=O)R", -S(=O)₂R", -S(=O)₂NH₂, -S(=O)₂NHR", -S(=O)₂NR"R", -NHS(=O)₂R", -NR"S(=O)₂R", -CF₃, - CF₂CF₃, -NHC(=O)NHR", -NHC(=O)NR"R", -NR"C(=O)NHR", -NR"C(=O)NR"R", - NR"C(=O)R" and the like. In relation to the aforementioned substituents, each moiety R" can be, independently any of H, alkyl, cycloalkyl, alkenyl, aryl, aralkyl, heteroaryl, or heterocycloalkyl, for example

All cited patents, patent applications, and other references are incorporated herein by reference in their entirety.

While typical embodiments have been set forth for the purpose of illustration, the foregoing descriptions should not be deemed to be a limitation on the scope herein. Accordingly, various modifications, adaptations, and alternatives can occur to one skilled in the art without departing from the spirit and scope herein.

As summarized above, the present disclosure provides plastic-metal hybrid materials that are formed by injection molding a plastic composition comprising a polyketone onto a surface of a metal part, the surface having nanometer-sized pores, micron-sized pores, or both, the pores having been formed by chemical etching or by electrical oxidation and surface coating.

As used herein, "polyketones" have the general structure 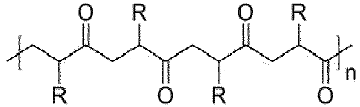 wherein each respective R group is hydrogen or a C₁-C₂₀ optionally substituted alkyl group, and n ≥ 1. In certain embodiments, the polyketone is formed according to the following reaction: 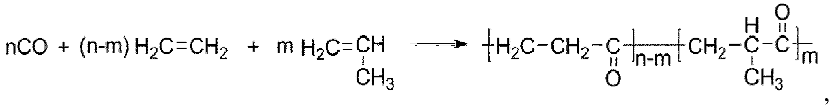 wherein n ≥ 1 and m ≥ 0.

The polyketone in the plastic composition may contain glass fiber, such as in an amount of up to about 70% by weight of the total weight of the polyketone material. For example, the polyketone may include about 1 to 70, about 5 to 70, about 10 to 70, about 10 to 60, about 10 to 50, about 15 to 70, about 15 to 60, about 15 to 50, about 15 to 40, about 15 to 30, about 20 to 30, about 1, about 5, about 10, about 15, about 20, about 22, about 24, about 25, about 26, about 28, about 30, about 32, about 34, about 36, about 38, about 40, about 42, about 44, about 46, about 48, about 50, about 55, about 60, about 65, or about 70 percent by weight of glass fiber.

In certain instances, the polyketone contains about 20% by weight glass fiber, has a density of about 1.4 g/cm³ as measured according to ASTM D792, a melting temperature of about 222°C as measured according to ASTM D3418, a tensile strength at yield of about 125 MPa at 23 as measured according to ASTM D638 at 23 , and a flexural modulus of about 5,200 MPa when measured according to ASTM D790 at 23 .

In other embodiments, the polyketone that is used in the present plastic-metal hybrid materials contains about 30% by weight glass fiber, has a density of about 1.5 g/cm³ as measured according to ASTM D792, a melting temperature of about 222°C as measured according to ASTM D3418, a tensile strength at yield of about 145 MPa as measured according to ASTM D638, and a flexural modulus of about 6,600 MPa when measured according to ASTM D790 at 23 .

The polyketone may alternatively contain about 30% by weight of glass fiber, have a tensile strength at yield of about 128 MPa as measured according to ASTM D638, a flexural modulus of about 6,500 MPa when measured according to ASTM D790, and a notched Izod impact strength of about 136 J/m when measured according to ASTM D256 at 23 .

Commercially available polyketone materials may be used for the presently disclosed plastic-metal hybrids. For example, either Poketone™ M330AG4BA or Poketone™ M331AG6BA (manufactured by HYOSUNG, Seoul, South Korea) may be used as the polyketone in the present inventions.

The metal part in the present plastic-metal hybrid materials may comprise any type of metal or metal alloy that is suitable for use in nano-molding technology applications. Typical metals include aluminum, an aluminum-containing alloy, steel (including stainless steel), copper, titanium, magnesium, or any combination thereof.

The surface of the metal part onto which the polyketone is injection molded in order to form the plastic-metal hybrid has nanometer-sized pores, micron-sized pores. Several processes have been developed among those working in the NMT field for forming pores of the required type on a surface of a metal part. In certain embodiments, the pores are formed by chemical etching or by electrical oxidation and surface coating. Exemplary procedures for forming the required pores on a surface of the metal part include "T"-treatment, "G" treatment, "E" treatment, TRIazine treatment (i.e., Technology Rising from IWA TE); these are procedures with which those skilled in the art are familiar and that are described more fully in the relevant literature. As used herein, "electrical oxidation and surface coating" refers to a process of the type exemplified by TRIazine treatment. A comparison of certain aspects of "T"-type treatment and TRI type treatment is provided below in Table 1:

**Table 1**

| | **TYPE 1 - T Treatment, or the like** | **TYPE 2 - TRI Treatment** |
|---|---|---|
| **Bonding method** | Anchoring porous hole generally | Anchoring hole + Chemical adhesion |
| **Treatment** | Chemical etching | Electrical oxidation + TRIazine surface coating |
| **Porous hole** | Various hole sizes (micro to nano) | Uniform nano hole + 0.2µm coating |
| **Technology** | "T", "G" treatment and etc... | "TRI", "E" and other similar tech |
| **Strength** | 30-35 MPa [with PBT] | 32∼40 MPa [with PBT] |
| **Water proof** | Possible but worse | Better |
| **Process** | Dipping solution [Around 30 steps] | Dipping solution [Around 12 steps] |

The pores may be formed by laser etching, although in certain instances laser etching in particular is not used.

The presently disclosed plastic-metal hybrid materials are characterized by a beneficially high bonding strength between the plastic resin and metal part, even when formed at a high tooling temperature. As a general matter, the use of higher tooling temperatures when bonding plastic resins with metal parts can confer higher bonding strength. However, practically speaking the upper limit of tooling temperature is limited by the solidification temperature of the resin being used. As a result, conventionally used resins, such as PBT, are not practical for use at certain tooling temperatures, because such resins will remain too soft to de-mold following the procedure. It has presently been found that the polyketone materials according to the present disclosure retain their useful characteristics following processing at relatively high tooling temperatures. Accordingly, a butt joint formed at a tooling temperature of about 150°C between the polyketone and the metal part in order to form a plastic-metal hybrid according to the present disclosure can have a bonding strength of about 34-38 mPa when measured according to ISO 19095. In certain embodiments, of the present plastic-metal hybrid material, a butt joint formed at a tooling temperature of about 165°C between the polyketone and the metal has a bonding strength of about 43-47 mPa when measured according to ISO 19095. Even at higher tooling temperatures (*i.e.,* above 160°C), the present polyketone materials properly de-mold and regain all required physical characteristics, unlike PBT when tooled at such temperatures.

Also provided herein are components for electronic or other consumer devices comprising a plastic-metal hybrid material according to the present disclosure, as well as devices that include a plastic-metal hybrid material according to the present disclosure. An electronic device may be, for example, a mobile phone, a tablet, a digital camera, an electronic reader, or a laptop or desktop computer. The components of such devices that can comprise the plastic-metal hybrid materials of the present disclosure can be, for example, all or a portion of an outer casing, shell, or panel.

Also disclosed are methods for forming a plastic-metal hybrid material comprising injection molding a plastic composition comprising a polyketone onto a surface of a metal part, the surface having nanometer-sized pores, micron-sized pores, or both, the pores having been formed by chemical etching or by electrical oxidation and surface coating. Each of the characteristics of the polyketone plastic composition, metal part, and etching procedures that have been described above may be used in accordance with the present methods, and are not recapitulated here. The process of injection molding the polyketone plastic composition onto the surface of the metal part may be carried out using conventional approaches, with which those skilled in the art are familiar.

### Aspects

In various aspects, the present disclosure pertains to and includes at least the following aspects.

Aspect 1. A plastic-metal hybrid material that is formed by injection molding a plastic composition comprising a polyketone onto a surface of a metal part, the surface having nanometer-sized pores, micron-sized pores, or both, the pores having been formed by chemical etching or by electrical oxidation and surface coating.

Aspect 2. The plastic-metal hybrid material according to aspect 1, wherein the polyketone has the general structure 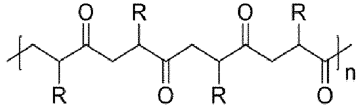 wherein each respective R group is hydrogen or a C1-C20 optionally substituted alkyl group, and n ≥ 1.

Aspect 3. The plastic-metal hybrid material according to aspect 1 or aspect 2, wherein the polyketone is formed according to the following reaction: 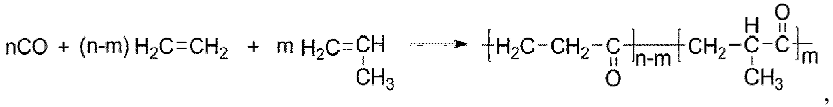 wherein n ≥ 1 and m ≥ 0.

Aspect 4. The plastic-metal hybrid material according to any preceding aspect, wherein the polyketone contains up to 70% by weight glass fiber

Aspect 5. The plastic-metal hybrid material according to any preceding aspect, wherein the polyketone contains about 15-40% by weight glass fiber.

Aspect 6. The plastic-metal hybrid material according to any preceding aspect, wherein the polyketone contains about 20-30% by weight glass fiber.

Aspect 7. The plastic-metal hybrid material according to any preceding aspect, wherein the polyketone contains about 20% by weight glass fiber, has a density of about 1.4 g/cm3 as measured according to ASTM D792, a melting temperature of about 222°C as measured according to ASTM D3418, a tensile strength at yield of about 125 MPa at 23 as measured according to ASTM D638 at 23 , and a flexural modulus of about 5,200 MPa when measured according to ASTM D790 at 23 .

Aspect 8. The plastic-metal hybrid material according to any preceding aspect, wherein the polyketone contains about 30% by weight glass fiber, has a density of about 1.5 g/cm3 as measured according to ASTM D792, a melting temperature of about 222°C as measured according to ASTM D3418, a tensile strength at yield of about 145 MPa as measured according to ASTM D638, and a flexural modulus of about 6,600 MPa when measured according to ASTM D790 at 23 .

Aspect 9. The plastic-metal hybrid material according to any preceding aspect, wherein a butt joint formed at a tooling temperature of about 150°C between the polyketone and the metal part has a bonding strength of about 34-38 mPa when measured according to ISO 19095.

Aspect 10. The plastic-metal hybrid material according to any preceding aspect, wherein a butt joint formed at a tooling temperature of about 165°C between the polyketone and the metal has a bonding strength of about 43-47 mPa when measured according to ISO 19095.

Aspect 11. A method for forming a plastic-metal hybrid material comprising:
injection molding a plastic composition comprising a polyketone onto a surface of a metal part, the surface having nanometer-sized pores, micron-sized pores, or both, the pores having been formed by chemical etching or by electrical oxidation and surface coating.

Aspect 12. The method according to Aspect 11, wherein the polyketone has the general structure 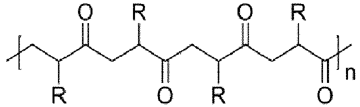 wherein each respective R group is hydrogen or a C1-C20 optionally substituted alkyl group, and n ≥ 1.

Aspect 13. The method according to Aspect 11 or Aspect 12, wherein the polyketone is formed according to the following reaction: 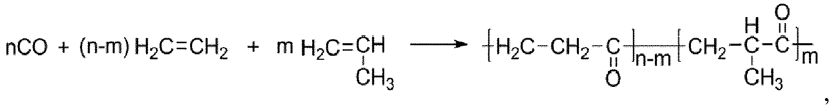 wherein n ≥ 1 and m ≥ 0.

Aspect 14. The method according to any one of Aspect 11-Aspect 13, wherein the polyketone contains about 15-40% by weight glass fiber.

Aspect 15. The method according to any one of Aspect 11-Aspect 14, wherein the polyketone contains about 20-30% by weight glass fiber.

Aspect 16. The method according to any one of Aspect 11-Aspect 15, wherein the polyketone contains about 20% by weight glass fiber, has a density of about 1.4 g/cm3 as measured according to ASTM D792, a melting temperature of about 222°C as measured according to ASTM D3418, a tensile strength at yield of about 125 MPa at 23 as measured according to ASTM D638 at 23 , and a flexural modulus of about 5,200 MPa when measured according to ASTM D790 at 23 .

Aspect 17. The method according to any one of Aspect 11-Aspect 15, wherein the polyketone contains about 30% by weight glass fiber, has a density of about 1.5 g/cm3 as measured according to ASTM D792, a melting temperature of about 222°C as measured according to ASTM D3418, a tensile strength at yield of about 145 MPa as measured according to ASTM D638, and a flexural modulus of about 6,600 MPa when measured according to ASTM D790 at 23 .

Aspect 18. The method according to any one of Aspect 11-Aspect 17, wherein a butt joint formed at a tooling temperature of about 150°C between the polyketone and the metal part has a bonding strength of about 34-38 mPa when measured according to ISO 19095.

Aspect 19. The method according to any one of Aspect 11-Aspect 17, wherein a butt joint formed at a tooling temperature of about 165°C between the polyketone and the metal part has a bonding strength of about 43-47 mPa when measured according to ISO 19095.

Aspect 20. An electronic device comprising a plastic-metal hybrid material that is formed from a plastic composition according to any one of Aspect 1-Aspect 10.

Aspect 21. An electronic device comprising a plastic-metal hybrid material according to any one of Aspect 1-Aspect 10.

Aspect 22. An electronic device comprising a plastic-metal hybrid material that is formed according to the method of any one of Aspect 11-Aspect 19.

Aspect 23. The electronic device according to Aspect 21 or Aspect 22, wherein the plastic-metal hybrid material forms at least a portion of a housing of said device.

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. Efforts have been made to ensure accuracy with respect to numbers (e.g., amounts, temperature, etc.), but normal experimental deviations should be accounted for.

### EXAMPLES

### Example 1

Three plastic resin materials were assessed for bonding strength pursuant to a nano-molding technology application at different tooling temperatures. The tested materials were (1) PBT containing 45% glass fiber; (2) polyketone containing 20% glass fiber; and, (3) polyketone containing 30% glass fiber. The specific identities of the resins used are described in Table 2:

**Table 2**

| **Product Designation** | **Description** | **Supplier and trade name** |
|---|---|---|
| WF009NA | PBT, 45% glass fiber (GF), black color | SABIC, LNP THERMOTUF WF009NA |
| M330AG4BA | Polyketone, 20% GF filled, natural color | HYOSUNG, M330AG4BA |
| M331AG6BA | Polyketone, 30% GF filled, black color | HYOSUNG, M331AG6BA |

The respective resins were injection molded onto pre-treated metal parts possessing nano- and micro-sized pores that were created using the TRIazine process. The injection molding conditions for producing samples used in standard physical tests are provided below in Table 3:

**Table 3**

| **Molding** | **Unit** | **Condition** |
|---|---|---|
| Cnd: Pre-drying time | Hour | 4 |
| Cnd: Pre-drying temp | °C | 120 |
| Zone 1 temp | °C | 225 |
| Zone 2 temp | °C | 230 |
| Zone 3 temp | °C | 230 |
| Nozzle temp | °C | 230 |
| Mold temp | °C | 80 |
| Injection speed | mm/s | 50 |
| Holding pressure | kgf/cm² | 700 |
| Max. Injection pressure | kgf/cm² | 800 |

The molding conditions for producing samples used in bonding strength tests, the zone temperature was 245°C and the mold temperature (tooling temperature) was 150°C to about 165°C mold temp.

The general testing conditions are described in Table 4:

**Table 4**

| **Test** | **Standard** | **Conditions** |
|---|---|---|
| MVR | ISO 1133 | 275°C, 5kg, 300s |
| Flexural | ASTM D790 | 3.2mm, 1.3mm/min |
| Tensile | ASTM D638 | 5 mm/min |
| HDT | ASTM D648 | 1.82 MPa, 6.4mm |
| Izod | ASTM D256 | Notched and un-notched, 23°C |
| Specific Gravity | ASTM D792 | |
| Dk/Df | SABIC method | 1.9GHz |
| Multi-axial Impact (MAI) | ASTM D3763 | 23°C, 3.3m/s speed |
| Bonding strength | ISO 19095 | Butt joint, "T" or "TRI" treatment with metal A15052 |

Bonding strength was measured in accordance with ISO 19095, which concerns "Evaluation of the adhesion interface performance in plastic-metal assemblies", and considered the bar test widely accepted by the industry. The present evaluation used a bonding strength test method based on ISO 19095 as follows:
(i) pre-treatment on the metal parts to create nano- and micro- sized holes on metal surface by chemical etching process;
(ii) within the effective treatment timeframe, plastic is injection-molded onto the pre-treated aluminum insets;
(iii) bonding force is measured by recording the force when the molded parts are pulled until the breaking point on a standard tensile test machine;
(iv) bonding strength is calculated to produce a value in terms of MPa by using bonding force divided by bonding area

FIG. 1 shows the results of the assessment of bonding strength at a butt joint between a metal part and the respective plastic resins described in Table 2. In the figure,
the first number appearing under each bar on the x-axis corresponds to the barrel temperature of the injection molding machine, and the second number corresponds to the tooling temperature. For example, under the first bar (data for WF009NA), "275+145°C" means that the barrel temperature was 275°C, and the tooling temperature was 145°C. The results reveal that the polyketone materials provided beneficial bonding strengths at higher tooling temperatures than are practical in connection with the conventional PBT resin (*i.e.,* at tooling temperatures higher than 160°C).

## Claims

1. A plastic-metal hybrid material that is formed by injection molding a plastic composition comprising a polyketone onto a surface of a metal part, the surface having nanometer-sized pores, micron-sized pores, or both, the pores having been formed by chemical etching or by electrical oxidation and surface coating.

2. The plastic-metal hybrid material according to claim 1, wherein the polyketone has the general structure 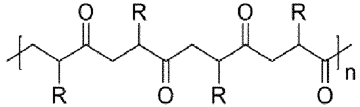 wherein each respective R group is hydrogen or a C₁-C₂₀ optionally substituted alkyl group, and n ≥ 1.

3. The plastic-metal hybrid material according to claim 1 or claim 2, wherein the polyketone is formed according to the following reaction: 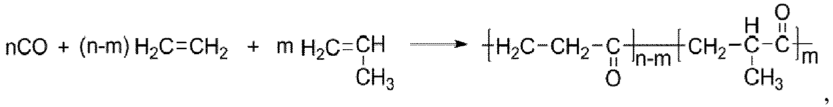 wherein n ≥ 1 and m ≥ 0.

4. The plastic-metal hybrid material according to any preceding claim, wherein the polyketone contains up to 70% by weight glass fiber

5. The plastic-metal hybrid material according to any preceding claim, wherein the polyketone contains 20% by weight glass fiber, has a density of 1.4 g/cm³ as measured according to ASTM D792, a melting temperature of 222°C as measured according to ASTM D3418, a tensile strength at yield of 125 MPa at 23 as measured according to ASTM D638 at 23 , and a flexural modulus of 5,200 MPa when measured according to ASTM D790 at 23 .

6. The plastic-metal hybrid material according to any preceding claim, wherein the polyketone contains 30% by weight glass fiber, has a density of 1.5 g/cm³ as measured according to ASTM D792, a melting temperature of 222°C as measured according to ASTM D3418, a tensile strength at yield of 145 MPa as measured according to ASTM D638, and a flexural modulus of 6,600 MPa when measured according to ASTM D790 at 23 .

7. The plastic-metal hybrid material according to any preceding claim, wherein a butt joint formed at a tooling temperature of 150°C between the polyketone and the metal part has a bonding strength of 34-38 mPa when measured according to ISO 19095.

8. The plastic-metal hybrid material according to any preceding claim, wherein a butt joint formed at a tooling temperature of 165°C between the polyketone and the metal has a bonding strength of 43-47 mPa when measured according to ISO 19095.

9. A method for forming a plastic-metal hybrid material comprising:
injection molding a plastic composition comprising a polyketone onto a surface of a metal part, the surface having nanometer-sized pores, micron-sized pores, or both, the pores having been formed by chemical etching or by electrical oxidation and surface coating.

10. The method according to claim 9, wherein the polyketone has the general structure 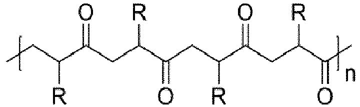 wherein each respective R group is hydrogen or a C₁-C₂₀ optionally substituted alkyl group, and n ≥ 1.

11. The method according to claim 9 or claim 10, wherein the polyketone contains 20% by weight glass fiber, has a density of 1.4 g/cm³ as measured according to ASTM D792, a melting temperature of 222°C as measured according to ASTM D3418, a tensile strength at yield of 125 MPa at 23 as measured according to ASTM D638 at 23 , and a flexural modulus of 5,200 MPa when measured according to ASTM D790 at 23 .

12. The method according to any one of claims 9-11, wherein the polyketone contains 30% by weight glass fiber, has a density of 1.5 g/cm³ as measured according to ASTM D792, a melting temperature of 222°C as measured according to ASTM D3418, a tensile strength at yield of 145 MPa as measured according to ASTM D638, and a flexural modulus of 6,600 MPa when measured according to ASTM D790 at 23 .

13. The method according to any one of claims 9-12, wherein a butt joint formed at a tooling temperature of 150°C between the polyketone and the metal part has a bonding strength of 34-38 mPa when measured according to ISO 19095.

14. The method according to any one of claims 9-12, wherein a butt joint formed at a tooling temperature of 165°C between the polyketone and the metal part has a bonding strength of 43-47 mPa when measured according to ISO 19095.

15. An electronic device comprising a plastic-metal hybrid material according to any one of claims 1-10.
